# EUROPEAN PATENT SPECIFICATION

(11) **EP 2 154 034 B1**
(45) Date of publication and mention of the grant of the patent: **28.09.2011**
(21) Application number: 08753112.5
(22) Date of filing: 19.05.2008
(51) Int. Cl.: B60R 22/28, B60R 22/46, B60R 22/48

(54) **SEAT BELT RETRACTOR, AND SEAT BELT DEVICE HAVING THE RETRACTOR**
GURTAUTOMAT UND SICHERHEITSGURTVORRICHTUNG DAMIT
RÉTRACTEUR DE CEINTURE DE SÉCURITÉ, ET DISPOSITIF DE CEINTURE DE SÉCURITÉ ÉQUIPÉ DE CELUI-CI

(30) Priority: 06.06.2007 JP 2007150368
(43) Date of publication of application: 17.02.2010
(73) Proprietor: Takata Corporation, Tokyo 107-8508 (JP)
(72) Inventor: KIMURA, Takaaki, TOKYO 107-8508 (JP); NOMURA, Yasuaki, TOKYO 107-8508 (JP)
(74) Representative: Banzer, Hans-Jörg
(86) International application number: PCT/JP2008/059605
(87) International publication number: WO 2008/149700

(56) References cited:
- EP-A1- 1 666 316
- EP-A2- 1 705 081
- DE-A1- 10 052 112
- JP-A- 2002 211 355
- JP-A- 2006 264 397
- US-A- 4 187 925

## Description

### Background Art

The present invention relates to a technical field of a motor-driven seatbelt retractor provided on a vehicle such as an automotive vehicle and configured to perform retraction and withdrawal of a seatbelt for constraining an occupant by a motor and a seatbelt apparatus having the same and, more specifically, to a technical field of a seatbelt retractor configured to absorb inertia energy of an occupant by an energy absorbing mechanism (hereinafter, referred to also as an EA mechanism: configured as a load limiting mechanism) to limit a load applied to the seatbelt in case of emergency in which a deceleration larger than in a normal condition is applied to the vehicle upon collision or the like of the vehicle and a seatbelt apparatus having the same.

A seatbelt apparatus mounted on a vehicle such as an automotive vehicle in the related art is intended to constrain an occupant by a seatbelt to prevent the occupant from jumping out from a seat in case of emergency such as a case where a large deceleration is applied to a vehicle like upon collision or the like. In the seatbelt apparatus as described above, a seatbelt retractor configured to retract the seatbelt so as to be capable of being withdrawn is provided.

Among the seatbelt retractors in this configuration, a seatbelt retractor configured to retract and withdraw a seatbelt with a motor is proposed in Japanese Unexamined Patent Application Publication No. 2006-264397 corresponding to the closest prior art document EP-A-1 705 081. The seatbelt retractor disclosed in Japanese Unexamined Patent Application Publication No. 2006-264397 includes a spool that retracts the seatbelt formed into a cylindrical shape and a motor arranged in the cylindrical portion of the spool concentrically with the spool so that the width of the seatbelt retractor (that is, the axial length of the spool) is restrained from becoming large, and is formed into a downsized compact shape as a whole.

The seatbelt retractor disclosed in Japanese Unexamined Patent Application Publication No. 2006-264397 is configured to absorb inertia energy of an occupant who is about to move because of inertia by the EA mechanism when blocking the withdrawal of the seatbelt in case of emergency when a large vehicle deceleration acts on a vehicle upon collision or the like in a state in which the seatbelt is fastened. In this case, a torsion bar is employed as the EA mechanism, and the torsion bar is torsionally deformed in case of the emergency described above, whereby the inertia energy of the occupant is absorbed.

Furthermore, in the seatbelt retractor disclosed in Japanese Unexamined Patent Application Publication No. 2006-264397, a rotor of the motor arranged in the cylindrical spool is formed into a cylindrical shape. Then, the torsion bar is disposed in the cylindrical rotor so as to penetrate through an inner hole thereof in the axial direction, so that the further downsized compact seatbelt retractor is achieved.

Incidentally, in the seatbelt retractor disclosed in Japanese Unexamined Patent Application Publication No. 2006-264397, the diameter of a head portion which is a torque transmitting portion formed at one end of the torsion bar is set to be larger than the inner diameter of the inner hole of the rotor in order to apply a torsional torque to the torsion bar at the time of the torsional deformation of the torsion bar, and a further effective application of the torsional torque to the torsion bar is achieved by setting the diameter of the torque transmitting portion on the other end of the torsion bar to a size larger than the inner diameter of the inner hole of the rotor as well.

However, when the diameters of the torque transmitting portions at the both ends of the torsion bar which project from the both ends of the rotor in the axial direction are set to be larger than the inner diameter of the inner hole of the rotor, the torsion bar cannot be penetrated through the inner hole of the cylindrical rotor in the axial direction. Therefore, the torsion bar cannot be integrated in the spool and the rotor.

Therefore, increasing the inner diameter of the inner hole of the rotor to a size larger than the diameter of the torque transmitting portions at the both ends of the torsion bar is conceivable, but increasing the inner diameter of the rotor results in increase in the outer diameter of the rotor. Consequently, the respective diameters of the motor and the spool are increased, and hence the seatbelt retractor is inevitably upsized.

### Disclosure of Invention

It is an object of the present invention to provide a motor-driven seatbelt retractor in which a retractor is formed into a downsized compact shape as a whole and a torsional torque can be applied to a torsion bar further effectively in case of emergency upon collision or the like of the vehicle by integrating the torsion bar in the spool and the motor shaft.
It is another object of the present invention to provide a seatbelt apparatus which is able to constrain an occupant gently without applying a large force from the seatbelt by absorbing inertia energy of the occupant further effectively when constraining the occupant by the seatbelt in case of emergency upon collision or the like of the vehicle.

In order to achieve the above-described object, a seatbelt retractor according to the present invention is a seatbelt retractor including: a cylindrical spool configured to retract a seatbelt so as to allow withdrawal of the same; a motor having a motor shaft disposed in a cylinder of the spool concentrically with the spool and being configured to generate a rotating force for causing the spool to be rotated in a belt retracting direction and a belt withdrawing direction, and an energy absorbing mechanism configured to absorb inertia energy of an occupant when the spool is rotated in the belt withdrawing direction in case of emergency, the motor having the motor shaft formed into a cylindrical shape, and the energy absorbing mechanism being a torsion bar being configured to absorb the inertia energy of the occupant by torsional deformation thereof and being disposed so as to penetrate through an inner hole of the motor shaft, characterized in that the diameter of torsion torque transmitting portions at both ends of the torsion bar are both set to be larger than the inner diameter of the inner hole of the motor shaft, and the motor shaft is divided into a predetermined number of pieces along the axial direction.

The seatbelt retractor according to the present invention is characterized in that the motor shaft includes first and second motor shaft members divided into two pieces along the axial direction thereof.
In addition, the seatbelt retractor according to the present invention is characterized in that the first and second motor shaft members are aligned in the axial direction and the radial direction and coupled with respect to each other.

Furthermore, a seatbelt apparatus according to the present invention at least comprises: a seatbelt configured to constrain an occupant, a seatbelt retractor configured to retract the seatbelt so as to allow withdrawal.of the same, a tongue slidably supported on the seatbelt; and a buckle which allows the tongue to disengageably engage therewith, characterized in that the seatbelt retractor is the seatbelt retractor in the present invention described above.

According to the seatbelt retractor in the present invention configured as described above, since the motor shaft of the electric motor is divided into a predetermined number of pieces, even though the diameter of the torque transmitting portions at the both ends of the torsion bar is set to a diameter larger than the inner diameter of the inner hole of the cylindrical motor shaft, the torsion bar can be penetrated through the inner hole of the motor shaft. In this case, the motor shaft can be assembled easily in a state in which the torsional portion of the torsion bar is penetrate through the motor shaft, so that workability of assembly of the electric motor and the torsion bar into the spool is improved.

Also, since both the diameters of the respective torque transmitting portions at the both ends of the torsion bar can be set to large diameters, a torsional torque of the torsion bar (torsional force) can be set to a large value. Accordingly, the torsional portion of the torsion bar can be torsionally deformed effectively at the time of activation of the EA of the torsion bar, so that the EA function by the torsion bar can be demonstrated effectively.

In addition, since the torsion bar is penetrated through the axial inner hole of the cylindrical motor shaft, the electric motor and the torsion bar can be disposed efficiently in the spool. Furthermore, since the diameter of the torsional portion as a portion of the torsion bar in which the motor shaft is penetrated therethrough can be reduced, so that the outer diameter of the motor shaft can also be reduced. Accordingly, sine the outer diameter of the electric motor can be reduced, and hence the outer diameter of the spool can also be reduced. Accordingly, the seatbelt retractor can be formed further compactly as a whole.

In particular, by forming the motor shaft into a two-piece member including two members, the reduction of the number of components is achieved and, simultaneously, alignment of the divided two members when coupling is simplified, so that the reduction of the number of steps in assembly is achieved.

In this manner, by integrating the torsion bar into the spool and the motor shaft, the seatbelt retractor driven by the motor is formed into a downsized compact shape as a whole and, simultaneously, the torsion torque can be applied to the torsion bar further effectively in case of emergency upon collision or the like of the vehicle.

Furthermore, according to the seatbelt apparatus having the seatbelt retractor in the present invention, by using the seatbelt retractor in the present invention, the occupant can be constrained gently without applying a large force from the seatbelt by absorbing the inertial energy of the occupant further effectively when constraining the occupant by the seatbelt in case of emergency upon collision or the like of the vehicle.

### Brief Description of the Drawings

Fig. 1 is a drawing diagrammatically showing an example of an embodiment of a seatbelt apparatus provided with a seatbelt retractor according to the present invention.
Fig. 2 is a vertical cross-sectional view diagrammatically showing the example of the embodiment of the seatbelt retractor according to the present invention.
Fig. 3 is an exploded perspective view of a rotor in an electric motor in Fig. 2.
Fig. 4 is a cross-sectional view taken along the line IV-IV in Fig. 2.

### Best Modes for Carrying Out the invention

Referring now to the drawings, best modes for carrying out the present invention will be described.

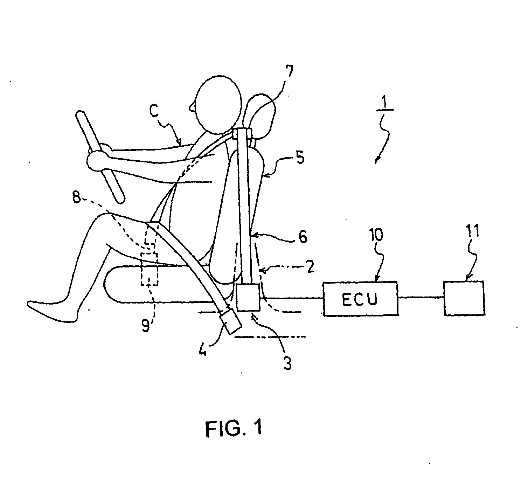

Fig. 1 is a drawing diagrammatically showing an example of an embodiment of a seatbelt apparatus provided with a seatbelt retractor according to the present invention.

As shown in Fig. 1, a seatbelt apparatus 1 in this example includes a seatbelt retractor 3 fixed to a B-pillar 2 or the like of a vehicle body and driven by an electric motor, a seatbelt 6 withdrawn from the seatbelt retractor 3 and fixed to a floor of the vehicle body or a vehicle seat 5 via a belt anchor 4 at a distal end thereof, a guide anchor 7 provided on the vehicle body such as a center pillar or the like, for example, and configured to guide the seatbelt 6 withdrawn from the seatbelt retractor 3 toward a shoulder of an occupant C, a tongue 8 slidably supported by the seatbelt 6 guided from the guide anchor 7, a buckle 9 fixed to the floor of the vehicle body or the vehicle seat and allows insertion and engagement of the tongue 8, an electronic control unit (ECU) 10 configured to control the motor of the seatbelt retractor 3, and input means 11 configured to detect various information required for controlling the motor of the seatbelt retractor 3 such as information on collision prediction and collision occurrence of a vehicle on which the seatbelt apparatus 1 is mounted, information on driving states of the vehicle, information on sitting positions and physical structures of the occupant C seated on the vehicle seat 5, information on traffic conditions in the periphery, information on climates or time zones, information on retracted amounts and withdrawn amounts of the seatbelt 6, information on engagement between the tongue 8 and the buckle 9 from a buckle switch and input the same into the ECU 10 constantly or at predetermined time intervals. The belt anchor 4, the seatbelt 6, the guide anchor 7, the tongue 8, and the buckle 9 may be those known in the related art.

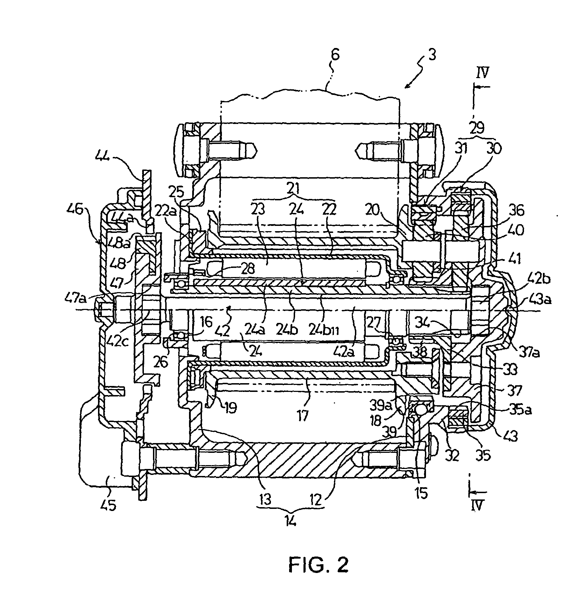

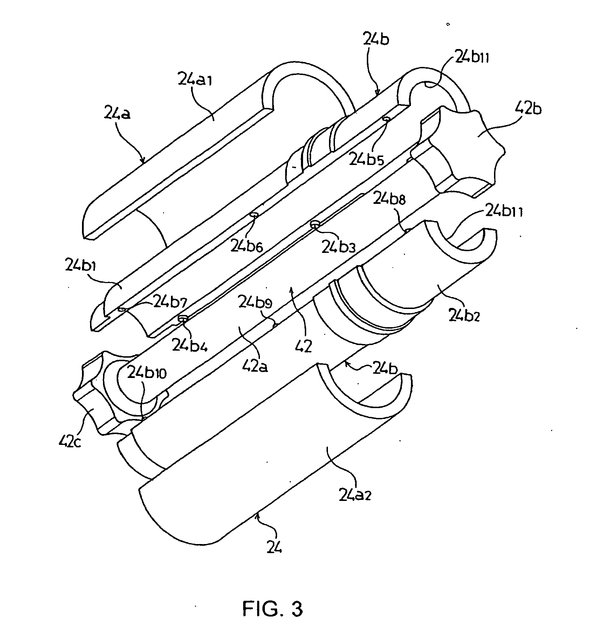

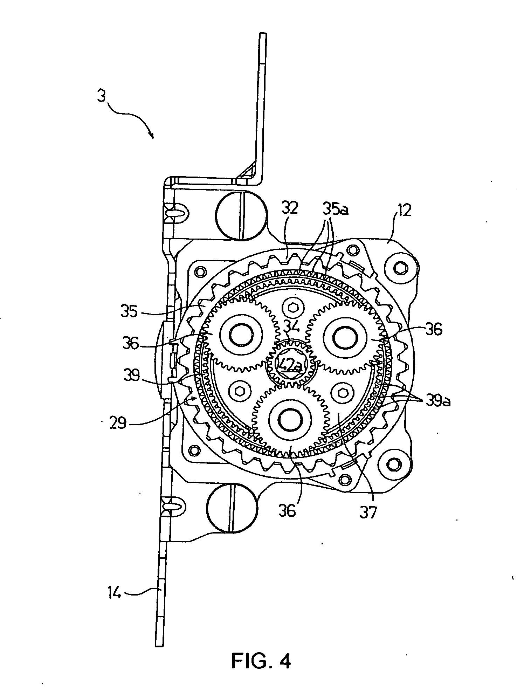

Fig. 2 is a vertical cross-sectional view diagrammatically showing the example of the embodiment of the seatbelt retractor according to the present invention, Fig. 3 is an exploded perspective view of a rotor in an electric motor, and Fig. 4 is a cross-sectional view taken along the line IV-IV in Fig. 2. In Fig. 2, an upper side from a centerline is the rotor shown in a cross-sectional view, and a lower side of the centerline is the rotor in front view.
As shown in Fig. 2, the seatbelt retractor 3 in this example includes a base frame 14 having a pair of left and right side walls 12, 13, and the pair of side walls 12, 13 are provided with circular openings 15, 16 arranged concentrically with respect to each other.

A spool 17 configured to retract the seatbelt 6 so as allow withdrawal of the same is disposed between the both side walls 12, 13 and flanges 18, 19 configured to guide the seatbelt 6 to be retracted are formed at both ends of the spool 17 respectively. The spool 17 is formed into a bottomed cylindrical shape formed with an annular bottom portion 20 having an opening at a center thereof at an end on the side of the side wall 12 and opened at an end on the side of the side wall 12.

An electric motor 21 configured to generate a rotating force for rotating the spool 17 in a belt retracting direction and in a belt withdrawing direction is stored in the spool 17 having the bottomed cylindrical shape by being inserted from the side of the opened side wall 13. The electric motor 21 is an "electric motor referred to as brushless motor of an inner rotor type, and includes a cylindrical motor housing 22, an annular stator 23 formed of a coil stored in the motor housing 22 and fixed thereto, and a rotor (rotor) 24 including a magnet penetrating through the motor housing 22 and the stator 23 in the axial direction.

A most part of the motor housing 22 is stored in the spool 17. Then, a flange-shaped end portion 22a on the side of the side wall 13 of the motor housing 22 is attached to the side wall 13 by a cylindrical mounting member 25. The motor housing 22 is fixed to the side wall 13 in this manner. An end of the spool 17 on the side of the side wall 13 is rotatably supported on the outer periphery of the mounting member 25.
The stator 23 is positioned in the motor housing 22 and is fixed to the motor housing 22.

The rotor 24 is formed into a cylindrical shape as a whole. As shown in Fig. 3, the rotor 24 includes a cylindrical rotating member 24a on the outer side, and a cylindrical rotating shaft member 24b provided so as to penetrate along the inner periphery of the rotating member 24a. Then, the rotating member 24a and the rotating shaft member 24b rotate integrally in either the belt retracting direction or the belt withdrawing direction by the rotating force applied to the rotating member 24a by an electromagnetic force from the stator 23. In other words, the rotor 24 is rotated by the electromagnetic force from the stator 23.

The rotating member 24a and the rotating shaft member 24b are both divided into two pieces in the axial direction at a position of the diameters and include respectively two members; first and second rotating members 24a₁, 24a₂ and first and second rotating shaft members 24b₁, 24b₂. One of the two divided end edges in the axial direction of the first rotating shaft member 24b₁ is provided with three engaging projections 24b₃, 24b₄ (a remaining one of the engaging projections is not shown), and the other divided end edge is provided with three engaging depressions 24b₅, 24b₆, 24b₇. In the same manner, one of two divided end edges of the second rotating shaft member 24b₂ in the axial direction, which opposes the other divided end edge of the first rotating shaft member 24b₁ is provided with three engaging projections 24b₈, 24b₉, 24b₁₀ which are engageable respectively with the three engaging depressions 24b₅, 24b₆, 24b₇ of the first rotating shaft member 24b₁. Although not shown in the drawing, the divided end edge of the second rotating shaft member 24b₂ opposing one of the divided end edges of the first rotating shaft member 29b₁ is formed with three engaging depressions which are the same as the engaging depressions 24b₅, 24b₆, 24b₇, which are engageable respectively with the three engaging projections 24b₃, 24b₄ of the first rotating shaft member 24b₁. Then, the first rotating shaft member 24b₁ and the second rotating shaft member 24b₂ are positioned and coupled in the axial direction and the radial direction by the respective engaging projections engaged with the corresponding engaging depressions, so that the cylindrical rotating shaft member 24b is configured.

Also, the two divided end edges of the first rotating member 24a₁ in the axial direction and the two divided end edges of the second rotating member 24a₂ in the axial direction are attached to the rotating shaft member 24b in abutment with each other, so that the cylindrical rotating member 24a is fixed to the rotating shaft member 24b. Although the rotating member 24a and the rotating shaft member 24b may be divided into three or more pieces, but it is preferable to divide into two pieces as in this example considering reduction in number of components and in number of steps in assembly.

As shown in Fig. 2, an end of the rotating shaft member 24b on the side of the side wall 13 is rotatably supported on an inner peripheral surface of the opening 16 of the side wall 13 of the frame 14 via a bearing 26. A portion of the rotating shaft member 24b on the side of the side wall 12 with respect to the rotating member 24a is rotatably supported by the motor housing 22 via a bearing 27. Therefore, the rotating shaft member 24b of the rotor 24 is configured as a motor shaft (a rotating shaft of the motor) of the motor 21. In this manner, the electric motor 21 is disposed so as to be stored in the spool 17 with the rotor 24, that is, the motor shaft thereof being concentrically with the spool 17.

A rotation sensor 28 formed of, for example, a Hall element or the like, is provided on the side wall 13 of the frame 14, and a predetermined number of projections or depressions, not shown, detected by the rotation sensor 28 are provided on the outer periphery of the rotating member 24a of the rotor 24 equidistantly in the circumferential direction. The rotation sensor 28 and the projections or the depressions configure input means configured to input information on the retracted amount and the withdrawn amount of the seatbelt 6 in the ECU 10 as one of the input means 11. Then, by the cooperation of the rotation sensor 28 and the projections or the depressions, the rotational position of the rotor 24 is detected. The retracted amount and the withdrawn amount of the seatbelt 6 by the spool 17 are obtained from the rotational position detection information of the rotor 24. In other words, in this example, the rotation sensor 28 and the projections or the depressions as position detecting means configured to detect the rotational position of the rotor 24 are used also as seatbelt retracted and withdrawn amount detecting means configured to detect the retracted amount and the withdrawn amount of the seatbelt 6.

Then, the ECU 10 is configured to perform ON-OFF control of the electric motor 21, control of the number of rotation of the electric motor 21, control of the direction of rotation of the electric motor 21, and control of the load of the electric motor 21, or the like on the basis of the rotational position detection information of the rotor 24 detected by the rotation sensor 28 and the projections or the depressions, that is, the information on the retracted amount and the information on the withdrawn amount of the seatbelt 6. In this case, the ECU 10 performs the respective controls of the electric motor 21 described above by controlling the amount of power supply supplied to the coil of the stator 23 of the electric motor 21 (more specifically, a value of current or voltage supplied to the coil) and the direction of power supply (more specifically, the direction of power distribution to the coil).

In this manner, by using the brushless motor as the electric motor 21, specific sensors for detecting the rotational position, the rotational speed, the direction of rotation or the like of the rotor 24 are not necessary, and hence the configuration is simplified, so that downsizing of the electric motor 21, improvement of the output of the electric motor 21, and improvement of heat discharging property are all achieved effectively.

As shown in Fig. 2, a planetary gear power transmitting mechanism 29 configured to perform power transmission between the electric motor 21 and the spool 17 is provided between the rotating shaft member 24b of the rotor 24 and the spool 17. The planetary gear power transmitting mechanism 29 includes two first and second planetary gear mechanisms 30, 31 arranged side-by-side in the axial direction.

As shown in Fig. 2 and Fig. 4, the first and second planetary gear mechanisms 30, 31 include a common annular-shaped annular member 32, and a cylindrical T-shaped member 33 of T-shape in axial cross section. The annular member 32 is fitted and fixed in the opening 15 of the side wall 12 of the frame 14.

The first planetary gear mechanism 30 includes a first sun gear 34 formed on an outer peripheral surface of the rotating shaft member 24b, an annular first internal gear 35 fixed to an inner peripheral surface of the annular member 32 at an end on the opposite side from the spool and having inner teeth 35a, first planetary gears 36 of a predetermined number (three in the illustrated example) engaging the first sun gear 34 and the first internal gear 35 so as to be capable of moving around the gears 34, 35 and rotating by themselves, and a first carrier 37 configured to rotatably support the first planetary gears 36.

The T-shaped member 33 rotatably supports the first planetary gears 36 and is fixed to the first carrier 37 so as to be integrally rotatably by a fixture such as a bolt.
The second planetary gear mechanism 31 includes a second sun gear 38 formed on an outer peripheral surface of the T-shaped member 33, an annular second internal gear 39 fixed to an inner peripheral surface of the annular member 32 at an end on the side of the spool and having inner teeth 39a, second planetary gears 40 of a predetermined number (three in the illustrated example) engaging the second sun gear 38 and the second internal gear 39 so as to be capable of moving around the gears 38, 39 and rotating by themselves, and a second carrier 41 fixed to the spool 17 so as to be rotatable integrally therewith and rotatably support the second planetary gears 40. The second planetary gears 40 are all supported so as to be rotatable relative to the spool 17.

Therefore, the rotation of the rotor 24 of the electric motor 21 is reduced by single reduction according to a first predetermined reduction gear ratio and transmitted to the first carrier 37 via the first sun gear 34 and the first planetary gears 36 of the first planetary gear mechanism 30, then the rotation of the first carrier 37 is reduced by double reduction according to a second predetermined reduction gear ratio and transmitted to the spool 17 via the second sun gear 38 and the second planetary gears 40 and the second carrier 41 of the second planetary gear mechanism 31, so that the spool 17 is rotated in a reduced speed by the rotation of the electric motor 21. In this manner, the planetary gear power transmitting mechanism 29 is the planetary gear power transmitting mechanism as a speed reducer having a double reduction system in which power transmission is achieved via an input to the sun gear and an output from the carrier in the first planetary gear mechanism 30, and power transmission is performed via the input to the sun gear and the output from the carrier also in the second planetary gear mechanism 31 in the same manner.

As shown in Fig. 2 and Fig. 3, a torsion bar 42 is provided so as to penetrate through the cylindrical rotor 24 as the EA mechanism. The torsion bar 42 includes a torsional portion 42a formed to have a diameter smaller than the inner diameter (diameter) of an inner hole 24b₁₁ of the rotating shaft member 24b and penetrated through the rotor 24, and configured to absorb torsion energy of torsional deformation, and first and second head portions 42b, 42c as torque transmitting portions provided at both ends of the torsional portion 42a projecting from the torsion rotating shaft member 24b in the axial direction and providing a torsion torque (torsional force) to the torsional portion 42a. The first and second head portions 42b, 42c are formed into a hexagonal shape having the same size, and the respective sides of the respective hexagonal shapes are all formed into a curved surface depressed inward. The diameter of a circle passing through the most depressed portions of the respective sides of the hexagonal shapes of the first and second head portions 42b, 42c and being concentric with the torsional portion 42a, and the diameter of a circle passing through the respective corners of the hexagonal shapes of the first and second head portions 42b, 42c and being concentric with the torsional portion 42a are both set to be larger than the diameter of the inner hole 24b₁₁ of the rotating shaft member 24b. In other words, at least the largest outer diameters of the first and second head portions 42b, 42c are set to be larger than the inner diameter of the inner hole 24b₁₁. By setting the diameter of the first and second head portions 42b, 42c to be large diameter as described above, the torsional deformation of the torsional portion 42a is effectively achieved.

The first head portion 42b which is located on the side of the planetary gear power transmitting mechanism 29 is fitted into a hexagonal depression 37a formed on the first carrier 37 of the first planetary gear mechanism 30 and connected to the first carrier 37 so as not to be capable of rotating relatively with respect to the first carrier 37. The first carrier 37 is rotatably supported at the center thereof by a supporting projection 43a of a cover 43 attached to the annular member 32.

A third side wall 44 is attached to the side wall 13 of the frame 14 at a predetermined distance in the axial direction. Deceleration sensing means 45 activated when sensing a significant vehicle deceleration generated in case of emergency described above and a locking mechanism 46 activated by the deceleration sensing means 45 to block (lock) at least the rotation in the belt withdrawing direction of the spool 17 is provided on the third side wall 44. The locking mechanism 46 includes a locking base 47. The locking base 47 is formed with a hexagonal depression 47a and the second head portion 42c is fitted into the depression 47a and is connected to the locking base 47 so as not to rotate relatively with the locking base 47.

The locking base 47 is rotatably provided with a pawl 48. The pawl 48 does not rotate in the normal state in which the deceleration sensing means 45 is not activated, and rotates freely in either the belt retracting direction and the belt withdrawing direction of the locking base 47 (that is, the spool 17). The pawl 48 rotates when the deceleration sensing means 45 is activated and an engaging claw 48a thereof engages inner teeth 44a of the third side wall 44, thereby blocking (locking) the rotation of the locking base 47 in the belt withdrawing direction. The deceleration sensing means 45 and the locking mechanism 46 are publicly known in the related art as disclosed in, for example, Japanese Unexamined Patent Application Publication No. 2002-120694 and Japanese Unexamined Patent Application Publication No. 2001-122077, and the configuration and the operation of these members can be understood easily by referring to these publications and the detailed description is omitted because it does not directly relate to the present invention.

In the seatbelt retractor 3 in this example configured as described above, in the normal state in which the belt is not fastened, the locking mechanism 46 is not activated and hence the locking base 47 is free to rotate. Also, the electric motor 21 is not rotated. Therefore, the occupant C is able to withdraw the seatbelt 6 feely from the spool 17 of the seatbelt retractor 3.

When the occupant C inserts and engages the tongue 8 into and with the buckle 9 after having sit on the vehicle seat 5 and withdrawn the seatbelt 6 by a predetermined amount, a buckle switch which is one of the input means 11 is activated and input engagement information of the tongue 8 and the buckle 9 into the ECU 10. Then, the ECU 10 rotates the electric motor 21 in the belt retracting direction. The rotation of the electric motor 21 is reduced by double reduction by the planetary gear power transmitting mechanism 29 and is transmitted to the spool 17, and the seatbelt 6 which is excessively withdrawn is retracted by the spool 17 by the rotation of the spool 17 in the belt retracting direction, whereby the slack of the seatbelt 6 is cancelled.

When the slack of the seatbelt 6 is cancelled by the belt retraction, a belt tension is generated on the seatbelt 6 by the further belt retraction and a supply current or a supply voltage to the electric motor 21 is increased. At least one of the belt tension, the supply current and the supply voltage to the electric motor 21 at this time is detected by adequate detecting means as the input means 11 and is inputted to the ECU 10. The ECU 10 stops the rotation of the electric motor 21 when at least one of the inputted belt tension, the supply current and the supply voltage reaches a predetermined value which is set in advance. Then, this state is maintained and the vehicle starts to travel. After having stopped the rotation of the electric motor 21 in this manner, the ECU 10 rotates the electric motor 21 in the reverse direction, that is, in the belt withdrawing direction by a slight amount to cause the spool 17 to rotate in the belt withdrawing direction via the planetary gear power transmitting mechanism 29 to withdraw the seatbelt 6 by a predetermined amount to set the belt tension to 0 or substantially 0, so that the occupant C can be brought into a comfortable state.

While the vehicle is traveling, the ECU 10 performs various sorts of control on the electric motor 21 described above on the basis of the respective information required for the motor control inputted from the input means 11 as described above, so that the belt tension is controlled to an adequate value on the basis of the respective information.
When the vehicle is stopped and the occupant C releases the engagement by detaching the tongue 8 from the buckle 9 for getting off the vehicle, the buckle switch is not operated, and the non-engagement information between the tongue 8 and the buckle 9 is inputted to the ECU 10. Then, the ECU 10 rotates the electric motor 21 in the belt retracting direction. With the rotation of the electric motor 21 in the belt retracting direction, the spool 17 retracts the seatbelt 6 until the initial retracted state is assumed, that is, by the entire amount withdrawn for fastening the same. Accordingly, the seatbelt 6 is stored in the seatbelt retractor 3. When the entire amount of the seatbelt 6 is retracted, the ECU 10 stops the rotation of the electric motor 21 on the basis of the belt retraction complete information from the rotation sensor 28.

In case of emergency in which a significantly large deceleration is applied to the vehicle by, for example, the vehicle collision or the like during the travel of the vehicle in a state in which the belt is fastened, the deceleration sensing means 45 is activated, and the rotation of the locking base 47 in the belt withdrawing direction is prevented as described above. Accordingly, the rotation of the second head portion 42c of the torsion bar 42 in the same direction is also blocked.
In contrast, since the seatbelt 6 is about to be withdrawn by the inertial movement of the occupant C and hence the spool 17 is about to be rotated in the belt withdrawing direction, the first head portion 42b of the torsion bar 42 is urged to rotate in the same direction via the second carrier 41, the second planetary gears 40, the second sun gear 38, and the first carrier 37.

Then, the torsional portion 42a of the torsion bar 42 is torsionally deformed, and the torsional deformation of the torsional portion 42a absorbs the.inertia energy of the occupant C, so that the load acting on the seatbelt 6 is limited so as to be increased. At this time, since the diameters of the first and second head portions 42b, 42c are set to large diameters, the torsional force of the torsional portion 42a is set to a large value so that the torsional portion 42a is torsionally deformed effectively. Accordingly, when the significantly large deceleration is generated in the vehicle, the occupant C is constrained by the seatbelt 6 of the seatbelt apparatus 1 without being exerted with a large force from the seatbelt 6.

According to the seatbelt retractor 3 in this example, since the rotating member 24a and the rotating shaft member 24b are divided into two pieces, that is, since the rotor 24 is formed into a two-piece member, even though the diameters of the first and second head portions 42b, 42c of the torsion bar 42 are set to be larger than the inner hole 24b₁₁ of the rotating shaft member 24b, the torsional portion 42a of the torsion bar 42 can be penetrated through the inner hole 24b₁₁ of the rotating shaft member 24b. Then, the rotor 24 can be assembled easily in a state in which the torsional portion 42a is penetrated through the inner hole 24b₁₁ of the rotating shaft member 24b, so that the assembleability of the electric motor 21 into the spool 17 is improved.

Then, since the diameters of the first and second head portions 42b, 42c are set to large diameters, the torsional force of the torsional portion 42a is set to a large value. Accordingly, the torsional portion 42a can be torsionally deformed effectively when the EA of the torsion bar 42 is activated. Therefore, the EA function by the torsion bar 42 can be demonstrated sufficiently.

In addition, since the torsion bar 42 is penetrated through the axial inner hole of the cylindrical rotor 24, the electric motor 21 and the torsion bar 42 can be disposed efficiently in the spool 17. In addition, since the diameter of the torsional portion 42a of the torsion bar 42 can be reduced, the outer diameter of the rotor 24 can also be reduced. Accordingly, sine the outer diameter of the electric motor 21 can be reduced, and hence the diameter of the spool 17 can also be reduced. Accordingly, the seatbelt retractor 3 can be formed further compactly as a whole.

In particular, in the seatbelt retractor 3 in this example, since the rotating member 24a is formed into a two-piece member including the first and second rotating members 24a₁, 24a₂, and the rotating shaft member 24 is formed into a two-piece member including the first and second rotating shaft members 24b₁, 24b₂, that is, since the rotor 24 is formed into the two-piece member having two members in the axial direction (two members of the first rotating member 24a₁ and the first rotating shaft member 24b₁, and the second rotating member 24a₂ and the second rotating shaft member 24b₂), the number of components can be reduced, and the alignment of the divided two members when being coupled is simplified, so that the reduction of the number of steps in assembly is achieved.

In this manner, by integrating the torsion bar 42 into the spool 17 and the rotor 24, the seatbelt retractor 3 driven by the motor is formed into a downsized compact shape as a whole and, simultaneously, the torsion torque can be applied to the torsion bar 42 further effectively in case of emergency upon collision or the like of the vehicle.

Also, by using the seatbelt retractor 3, the seatbelt apparatus 1 in this example is able to constrain the occupant C gently without applying a large force from the seatbelt 6 by absorbing the inertial energy of the occupant C further effectively when constraining the occupant C by the seatbelt 6 in case of emergency upon collision or the like of the vehicle.

### Industrial Applicability

The seatbelt retractor and the seatbelt apparatus having the same in the present invention can be used for the seatbelt retractor mounted on a vehicle such as an automotive vehicle and configured to retract and withdraw the seatbelt for constraining the occupant by the motor and the seatbelt apparatus having the same.

## Claims

1. A seatbelt retractor (3) comprising: a cylindrical spool (17) configured to retract a seatbelt so as to allow withdrawal of the same; a motor (21) having a motor shaft (24b) disposed in a cylinder of the spool (17) concentrically with the spool and being configured to generate a rotating force for causing the spool (17) to be rotated in a belt retracting direction and a belt withdrawing direction, and an energy absorbing mechanism configured to absorb inertia energy of an occupant when the spool (17) is rotated in the belt withdrawing direction in case of emergency, the motor (21) having the motor shaft (24b) formed into a cylindrical shape, and the energy absorbing mechanism being a torsion bar (42) being configured to absorb the inertia energy of the occupant by torsional deformation thereof and being disposed so as to penetrate through an inner hole of the motor shaft (24b), **characterized in that**
the diameter of torsion torque transmitting portions (42b,42c) at both ends of the torsion bar (42) are both set to be larger than the inner diameter of the inner hole of the motor shaft (24b), and
the motor shaft (24b) is divided into a predetermined number of pieces along the axial direction.

2. The seatbelt retractor according to Claim 1, wherein the motor shaft (24b) includes first and second motor shaft members (24b₁,24b₂) divided into two pieces along the axial direction thereof.

3. The seatbelt retractor according to Claim 2, wherein the first and second motor shaft members (24b₁,24b₂) are aligned in the axial direction and the radial direction and coupled with respect to each other.

4. A seatbelt apparatus at least comprising: a seatbelt configured to constrain an occupant, a seatbelt retractor (3) configured to retract the seatbelt (6) so as to allow withdrawal of the same, a tongue (8) slidably supported on the seatbelt; and a buckle (9) which allows the tongue (8) to disengageably engage therewith,
wherein the seatbelt retractor (3) is the seatbelt retractor according to any one of Claims 1 to 3.

## Patentansprüche

1. Sitzgurtaufroller (3) umfassend:
eine zylindrische Spule (17), welche ausgestaltet ist, um einen Sitzgurt einzuziehen, um ein Zurückziehen desselben zu ermöglichen;
einen Motor (21), der eine Motorwelle besitzt, welche sich in einem Zylinder der Spule (17) konzentrisch mit der Spule befindet und ausgestaltet ist, um eine Drehkraft zu erzeugen, welche veranlasst, dass die Spule (17) in eine Gurteinziehrichtung, und Gurtrückziehrichtung gedreht wird, und einen Energieabsorptionsmechansimus, welcher ausgestaltet ist, um Trägheitsenergie eines Insassen zu absorbieren, wenn die Spule (17) in die Gurtrückziehrichtung im Falle eines Notfalls gedreht wird, wobei der Motor (21) die mit einer zylindrischen Form ausgebildete Motorwelle aufweist, und wobei der Energieabsorptionsmechanismus ein Torsionsstab (42) ist, welcher zum Absorbieren der Trägheitsenergie des Insassen bei dessen Torsionsverformung ausgebildet und angeordnet ist, um ein Innenloch der Motorwelle (24b) zu durchdringen,
**dadurch gekennzeichnet, dass** der Durchmesser von Torsionsdrehmomentübermittlungsabschnitten (42b, 42c) an beiden Enden des Torsionsstabs (42) größer als der Innendurchmesser des Innenlochs der Motorwelle (24b) ist, und
dass die Motorwelle (24b) in eine vorgegebene Anzahl von Teilen entlang der Achsenrichtung unterteilt ist.

2. Sitzgurtaufroller (3) nach Anspruch 1, wobei die Motorwelle (24) erste und zweite Motorwellenelemente (24b₁, 24b₂) aufweist, welche in zwei Teile entlang der Achsenrichtung unterteilt sind.

3. Sitzgurtaufroller (3) nach Anspruch 2, wobei die ersten und zweiten Motorwellenelemente (24b₁, 24b₂) in Achsenrichtung und in radialer Richtung ausgerichtet sind und miteinander gekoppelt sind.

4. Sitzgurtaufroller (3) umfassen zumindest:
einen Sitzgurt, welcher ausgestaltet ist, um einen Insassen zu halten,
einen Sitzgurtaufroller (3), welcher ausgestaltet ist, um den Sitzgurt einzuziehen, um ein Zurückziehen desselben zu ermöglichen,
eine Zunge (8), welche auf dem Sitzgurt gleitend gelagert ist, und
ein Schloss (9), welche ermöglicht, dass die Zunge (8) lösbar damit in Eingriff gebracht werden kann,
wobei der Sitzgurtaufroller (3) der Sitzgurtaufroller nach einem der Ansprüche 1 bis 3 ist.

## Revendications

1. Un enrouleur de ceinture de sécurité (3) comprenant: une bobine cylindrique (17) configurée pour enrouler une ceinture de sécurité pour permettre son retrait; un moteur (21) ayant un arbre de moteur (24b) disposé dans un cylindre de la bobine de façon concentrique par rapport à la bobine et étant configuré pour générer une force de rotation pour provoquer la rotation de la bobine (17) dans une direction d'enroulement de la ceinture et une direction de retrait de la ceinture, et un mécanisme d'absorption d'énergie configuré pour absorber l'énergie d'inertie d'un occupant lorsque la bobine (17) subit une rotation dans la direction de retrait de la ceinture en cas d'urgence, le moteur (21) ayant l'arbre de moteur (24b) conformé en une forme cylindrique, et le mécanisme d'absorption d'énergie étant une barre de torsion (42) configurée pour absorber l'énergie d'inertie de l'occupant par la déformation sous torsion de celle-ci et disposée de manière à pénétrer à travers un orifice intérieur de l'arbre de moteur (24b), **caractérisé en ce que**
les diamètres des parties de transmission du couple de torsion (42b, 42c) aux deux extrémités de la barre de torsion (42) sont tous les deux dimensionnés pour être plus grands que le diamètre intérieur de l'orifice intérieur de l'arbre de moteur (24b), et
l'arbre de moteur (24b) est divisé en un nombre prédéterminé de parties selon la direction axiale.

2. L'enrouleur de ceinture de sécurité selon la revendication 1, dans lequel l'arbre de moteur (24b) comprend des premier et deuxième éléments (24b₁, 24b₂) de l'arbre de moteur divisés en deux parties dans le sens axial de celui-ci.

3. L'enrouleur de ceinture de sécurité selon la revendication 2, dans lequel les premier et deuxième éléments (24b₁, 24b₂) de l'arbre de moteur sont alignés dans le sens axial et le sens radial et couplés l'un par rapport à l'autre.

4. Un appareil formant ceinture de sécurité comprenant : une ceinture de sécurité configurée pour contraindre un occupant, un enrouleur de ceinture de sécurité (3) configuré pour enrouler la ceinture de sécurité (6) pour permettre sa rétraction, une languette (8) supportée de manière coulissante sur la ceinture de sécurité, et une boucle (9) qui permet à la languette (8) de venir en prise d'une manière amovible avec celle-ci,
dans lequel l'enrouleur de ceinture de sécurité (3) est l'enrouleur de ceinture de sécurité selon l'une quelconque des revendications 1 à 3.
